# NEW EUROPEAN PATENT SPECIFICATION

(11) **EP 1 267 645 B2**
(45) Date of publication and mention of the opposition decision: **26.10.2011**
(45) Mention of the grant of the patent: 12.05.2004
(21) Application number: 01933684.1
(22) Date of filing: 12.03.2001
(51) Int. Cl.: A23L 1/40, A23P 1/02, A23P 1/12, A23L 1/39

(54) **COOKING AID**
KOCHHILFSMITTEL
ADJUVANT POUR LA CUISINE

(30) Priority: 29.03.2000 EP 00106664
(43) Date of publication of application: 02.01.2003
(73) Proprietor: SOCIETE DES PRODUITS NESTLE S.A., 1800 Vevey (CH)
(72) Inventor: MAHE, Yannick, F-80000 Amiens (FR); ISLER, Ernst, CH-8552 Felben-Wellhausen (CH); FROEHLICH, Markus, CH-8051 Zurich (CH)
(74) Representative: Rupp, Christian
(86) International application number: PCT/EP2001/002724
(87) International publication number: WO 2001/072148

(56) References cited:
- EP-A- 0 888 721
- EP-A- 0 938 847
- EP-A1- 0 324 072
- WO-A-98/15188
- DE-U1- 29 801 472
- GB-A- 316 850
- JP-A- 3 147 770
- JP-A- 61 162 157
- JP-A- 61 166 386
- 'Chocolate assortments favoured in Europe' CONFECTIONERY PRODUCTION October 1973 - October 1973, UK, pages 551 - 556
- 'FE Highlights' FOOD ENGINEERING vol. 54, June 1982 - June 1982, US, ISSN 0193-323X page 32
- SCHILD E.: 'Der junge Konditor', vol. 2, 1983, DR. PFANNEBERG & CO., DE, ISBN 3-8057-0243-4 pages 297 - 317

## Description

The present invention relates to a flavouring cooking aid capable of being melted or dissolved and intended to be used for the seasoning of cooked foods and/or the cooking or the preparation of prepared meals.

The cooking aids currently available for seasoning/flavouring exist, on the one hand, in the form of liquid or fluid products. However, the problem of portioning exists with this type of product. Moreover, products exist in powdered form which are added directly on the plate or to the dish. However, this type of product is very hygroscopic and requires an appropriate packaging and is not easy to portion out either or to preserve once opened. The dissolution and the distribution of these pulverulent products is not always easy and results in the formation of lumps. Ready-portioned cooking aids exist in the form of tablets. The latter are manufactured by the compacting of pulverulent/dehydrated ingredients. They must be dissolved in a liquid and this dissolution stage is sometimes long and is not very easy. Some of these stock tablets are intended to be dissolved in rice, pasta and/or vegetable cooking water. Once cooked, the products are drained and practically all the flavourings dissolved in the cooking water are lost. Some cooking aids of the tablet type can also be designed for cooking in a frying pan. However, these tablets exhibit poor melting and need to be crushed. In spite of this, the dispersion of the seasoning is far from being optimum and residual pieces or lumps are often observed, which is particularly unpleasant during consumption. Furthermore, the tablets are manufactured from dehydrated ingredients and it is known that the concentration/dehydration operations are harmful to the organoleptic qualities of the products obtained, more particularly from the flavour point of view. Indeed, the flavour intensity, richness and strength of the dehydrated/concentrated product are far from matching the initial product or a fluid product which is less concentrated.

EP 888721 describes a cooking aid including a aromatic core surrounded with a binder. In the case of EP 888721, the aromatic core of the cooking cooking is made of dehydrated ingredients.

Flavoured butters make it possible to overcome some of these problems, but their shelf life is limited and they have to be stored refrigerated. Moreover, this type of very fatty product constitutes a useful flavour vector only for lipophilic flavours.

Various forms of products of the flavouring capsule type exist; they generally consist of an external coating based on gelatin or alginate or another gelling polymer, which requires prolonged heating in aqueous medium to ensure dissolution and/or rupture of this envelope and release of the contents.

The processes for manufacturing such capsules exploit the coagulating properties of these polymers and the surface tension forces. These capsules are thus produced through the formation of beads or drops in a gelling solution (case of alginates) or a cooling solution (case of gelatin). However, this principle has its limits and the size of the beads formed is limited. In other cases, an empty capsule is formed, in a first instance, by moulding two halves, joining them and filling the capsule formed.

JP 10075720 describes a food product composed of a fatty phase and a starchy phase. The fatty phase contains dispersed capsules consisting of a water-soluble envelope containing a flavouring ingredient. When this product is dispersed and heated in a boiling aqueous phase, the water-soluble envelope dissolves and releases the flavouring ingredient. Such a product is intended for the manufacture of roux by adding boiling water.

Various patents describe capsules containing a flavouring composition in powdered, paste, aqueous liquid, oily liquid or emulsion form. In all these cases, the encapsulating material is a gelatin, an alginate, a derivative of these or any other water-soluble gelling or cogelling polymer: JP 10014554; JP 09313154; DE 29713074; JP 09163963; WO 95/05751; EP 525731; JP 02079941.

Moreover, JP 08010313 describes a capsule-type product containing a liquid filling. This capsule is in the form of a multilayer (3-layer) droplet in which the core is separated from the envelope by a lipophilic layer.

EP 938847 describes a chilled foodstuff which is a dessert product, even preferentially a chilled dairy dessert product exhibiting high Aw thus implying a conservation under chilled conditions. EP 938847 does not concern cooking aid because the product object of the process describes in it is a foodstuff intended to be consumed as such and not intended to be useful like seasoning of dish or cooked food.

JP 01232963 describes a multilayer soft capsule produced by lamination-moulding. The capsule material is chosen so as to have a high resistance to high temperatures, to acids, to bases and to water. Such a product is intended for long preservation of the filling towards external agents.

WO 9815188 describes a foodstuff including an envelope made of wafer wrapping a pasty filing. A wafer envelope is hard and cannot be molded nor melt in food or pan and even if broken leaves remaining particules.

The aim of the present invention is to provide a cooking aid which is solid at room temperature and which dissolves rapidly in a boiling liquid or which melts rapidly upon contact with hot food or with the surface of a hot frying pan.

To this effect, the cooking aid according to the present invention is composed of an envelope based on fat which is solid at room temperature and a fluid flavouring filling.

The product thus has good mechanical resistance to handling at room temperature and melts rapidly upon contact with food or a kitchen utensil which is hot, which allows rapid dissolution and dispersion of the filling. Also, especially in the case of seasoning cooked pasta, rice or vegetables, the fatty coating melts rapidly, releasing the fluid filling which becomes rapidly distributed in the meat and vegetable dish. The proportion of the weight of the envelope in the product may be chosen so as to give the product a sufficient mechanical strength to allow easy unmoulding and handling. The weight of the envelope may be in a range of the order of 30 to 90% of the final product, for example. Likewise, the fat may have a melting point of between 30 and 60°C.

In the case of a use of the product according to the invention in cooking mode, its properties make it possible to have instant and uniform distribution of the fat and the flavouring ingredients in the frying pan, avoiding the persistence of lumps and of coarse residues. Furthermore, the fluid filling makes it possible to provide novel and different flavour notes of a much better quality compared with the tablets. The flavour profile is richer and more balanced between the top notes and the tail notes. Thus, depending on the carrier for the flavouring ingredients (aqueous or fatty or both), it will be possible to provide a varied range of flavours, of a hydrophilic or lipophilic nature. The flavour profile will be in any case of a much better quality mainly because of the preservation of these top flavour notes since the filling does not undergo dehydration.

The envelope of the product according to the invention should thus have the following properties: mechanical resistance to handling at room temperature and rapid melting in hot food or on contact with a hot frying pan. The specific formulation of this envelope has thereby allowed, via the selection of fats used as well as of filling additives, to solve these problems. The quantity of fat contained in the envelope may be of the order of 40 to 100% approximately. The filling additives, up to 60% approximately of the weight of the envelope, may be of a polysaccharide and/or protein and/or fibre and/or salt nature. This may include native starch, chemically and/or physically modified starch, maltodextrin, glucose syrup or a mixture thereof, for example. The polysaccharides added to the fat constituting the envelope may be replaced completely or partially by protein derivatives of the whey protein and/or caseinate type, for example. Dietary fibres of the wheat fibre, methylcellulose or cellulose type, for example, may also form part of these filling additives for the envelope material. Such additives make it possible to increase the viscosity of the envelope material. This is advantageous in the case where the proportion by weight of the envelope relative to the filling in the final product is low.

The fat may be preferably a hydrogenated or fractionated vegetable fat such as hydrogenated palm oil, for example. Animal fat can only be used if it is hydrogenated. The fatty substance, or the mixture of fatty substances used for producing the envelope of the present invention, may have a melting point preferably of between 40 and 55°C approximately. The viscosity of the mixture of the envelope material may be of the order of 4 to 18 Pa.s, in the region of 10 s⁻¹ and 40°C.

The envelope of the product according to the invention may, in addition, comprise vegetable extracts, particles, spices such as curry, pepper, paprika, for example, colourings, flavourings and/or visual components such as flakes of parsley, garlic, basil, onion, for example and/or vitamins such as riboflavin for example. Moreover, the envelope of the product according to the invention may be partially or completely coated with flakes of dehydrated vegetables or semolina, for example.

The SFC (solid fat content) curve of a fatty substance defines the fraction of fat present in the solid state in the fatty substance as a function of the temperature over a given temperature range, in general 0° - 60°C approximately for dietary fatty substances. In the present case, the fat used should have a high solids content in the region of room temperature. Furthermore, the SFC curve should decrease rapidly beyond 40°C approximately so as to ensure rapid melting during contact with hot foods for consumption. This SFC curve thus advantageously has a biphasic appearance with a low slope between 0°C and room temperature (20 to 30°C approximately) and a very high slope over 35° to 45°C approximately.

These properties thus allow rapid melting of the envelope when the product is added to a hot rice, pasta or vegetable portion just before consumption, while providing good mechanical strength at room temperature.

The unit mass of the product according to the invention may be of about 10-15 g, which allows seasoning of a portion of about 200-300 g of cooked food. The quantity of units of product according to the invention to be added may be adjusted according to the quantity of food to be seasoned.

This rapid melting property of the envelope of the product according to the invention also allows its application as cooking aid in the preparation of prepared meals and dishes. It is thus possible, for example, to add the product according to the invention to a hot frying pan. The envelope melts immediately, the fluid filling is released and spreads rapidly in the frying pan. It is consequently possible to add meat, fish, vegetables and/or rice, for example, in order to carry out the cooking with or without addition of liquid, for example. In a similar manner, it is possible to add the product according to the invention a few minutes before the end of the cooking of vegetables, meats, fish, rice, prepared meals, sauce dishes, for example.

The envelope of the product according to the invention may also contain, in addition, processed cheese for use for oven-cooking or grating, for example.

The filling/envelope weight ratio in the final product may be in a very broad range, from 70/30 to 10/90, approximately, preferably 50/50. The value of this ratio is dependent on the size, the shape of the product (sphere, parallelepiped, cylinder portion, bar, heart, cone, truncated cone, or any other moulded shape, for example) as well as the viscosity of the filling. The thickness of the envelope will depend on the viscosities of the filling and on the constituent material of the envelope, on the shape, the size and the filling/envelope weight ratio in the product according to the invention. As a guide, the thickness of this envelope may be in the region of 1.5 to 4.0 mm for a spherical product of 10-15 grams, for example. The finer the envelope, the more rapid its melting and the more rapid the dispersion of the filling.

The filling in the product according to the invention is a fluid flavouring product. It is advantageous to use a particularly fluid product for all the reasons explicitly stated above: rapid dispersion, flavour profile which is more complex and of better quality. The filling in the product according to the invention may be based on water, based on fat or an emulsion. This filling may be a concentrated meat and/or vegetable broth of the chicken broth or beef broth type, for example. The filling may be produced according to the mode of manufacture of a reaction flavouring. Such a flavouring is traditionally manufactured by heating a mixture comprising protein or amino derivatives with reducing sugars. Depending on the temperature-duration of treatment pair applied, different flavour profiles are obtained.

The more or less concentrated broth may be added or replaced by a fatty preparation based on olive oil, butter oil, sunflower oil, palm oil, which are more or less hydrogenated, for example. This fatty preparation as well as the broth may be supplemented and/or flavoured by addition of flavourings, spices and seasonings such as basil, parsley, garlic, onion, curry, ginger, thyme, fine herbs, chilli, coriander, plant and/or animal food particles or cheese for example.

In the case of a use of the product according to the invention in prepared meals of the vegetable and/or meat type which are sautéed or in sauce form, the filling may contain one or more thickening ingredients of the native and/or modified starch, guar flour, alginate or maltodextrin type, alone or in the form of mixtures, for example. Thus, during the melting of the envelope, the filling may serve not only as seasoning but also as a binder with the possible addition of liquids such as wine, water, vinegar, cream or milk, for example.

The product according to the invention may be dissolved in a hot liquid for the instant reconstitution of a hot drink, of a broth or of a soup. The product according to the invention has the advantage of being easy to portion out, instantly dissolved without lumps with minimum mechanical force in a hot liquid and also has optimum organoleptic characteristics.

Similarly, the product according to the invention may be melted/dissolved in the base of a frying pan after cooking vegetables and/or meat or in a more or less large quantity of hot or cold liquid, this being in order to produce glazing or a sauce, for example.

The preservation of the product at room temperature may be achieved via the salt content of the filling which may be of the order of 10 to 40% and preferably from 20 to 30%. The salt present in the filling optionally combined with other water activity depressants (humectants) such as polysaccharides, glucose syrups, for example, contributes to reducing the water activity of the product (Aw) which may preferably be in a range of the order of 0.2 to 0.8. In the case where the filling has an Aw greater than 0.8, it will be possible to envisage the use of chemical preservatives, such as sulphites for example, in order to improve the preservation of the product.

The moulds used for shaping the product according to the invention may be metallic or plastic moulds, for example. In the case of the use of reusable metallic moulds, the product may be unmoulded after the cooling step and packaged in cases, blister packs or boxes, for example, or any other packaging capable of protecting the product. A blister back is a packaging consisting of one or more plastic shells, optionally sealed, glued to a carton base or plastic support. Such a packaging is intended to present and protect small-sized merchandise. The non-recyclable moulds can serve as primary packaging, the product is then provided in a sealed blister-type packaging. The blister pack can then be placed in a case in order to improve the protection of the product and allow information relating to the product to be written on. In this embodiment, the consumer can open the blister pack at the time the product according to the invention is used.

The moulds used for shaping the product according to the invention may have any type of shape: sphere, cube, parallelepiped, cone, heart, bar, various animals and persons, for example. The sizes and proportions of the product according to the invention will depend on the flavouring power and/or the binding effect required. The volume of the product according to the invention may be within a range of the order of 8 to 25 cm³, for example. Theoretically, there is no limit regarding the sizes of the product according to the invention. The products according to the invention can be preserved at room temperature over periods of up to 12 or even 18 months.

The following examples make it possible to illustrate a few variants of the product and different embodiments for using the product according to the invention.

### EXAMPLE 1

### Chicken stock

*Production of the envelope material*: A material constituting the envelope is prepared which has the following composition:
- Partially hydrogenated/fractionated palm oil 1.5 kg
- Chopped parsley (flakes) 2 g
- Vitamin B2 0.5 g
- Paprika powder 1.7 g
- Maltodextrin 560 g

To prepare this material, the fat is heated to 55-60°C and introduced into a jacketed ribbon mixer. The other ingredients are then added and mixed.

The mixture is then cooled in the mixer by means of the jacket whose temperature is set at 30°C. At the end of this step, the mixture is easily pumpable and malleable and has a relatively viscous texture. Its temperature is then 30°C approximately. It is then transferred to a buffer tank kept at the same temperature.

*Production of the filling*: The filling consists of a reaction flavouring prepared as follows. The following ingredients are mixed in a reactor and heated for 90 min at 98°C:
- Salt 750 g
- Water 1 250 kg
- Granulated sugar 315 g
- Maltodextrin 316 g
- Powdered chicken meat 72 g
- Powdered yeast extract 72 g
- Sodium inosinate 21 g
- Fried onion flavour 16 g
- L-Cysteine 12 g
- Turmeric 16 g
- Rosemary 3.15 g
- Diammonium phosphate 7 g
- Pepper 3 g
- Chicken flavour 3.5 g
- Cassava starch 87 g
- Keltrol alginate 5.5 g

After the reaction, the mixture is cooled to room temperature. The preparation of this mixture may be carried out beforehand. The mixture may be measured out at room temperature. It is transferred to a non-heated buffer tank.

The mixtures are transferred to the corresponding hoppers of an Awema UDM 202/96 measuring device (AWEMA AG, ZURICH) via thermostatically maintained pumps. The temperature of these hoppers is also maintained so as to maintain a constant viscosity, that is 30°C for the envelope material and 25°C for the filling.

The mixtures are directly injected and measured out by coextrusion via double measuring nozzles (diameter of the inner nozzle 7.6 mm, diameter of the outer nozzle 9 mm) into moulds comprising 20 to 120 PET (PolyEthylene Terephthalate) cells having a parallelepipedal shape. The pistons measuring out the products distribute the filling and the envelope material in a proportion of 50/50. The total mass delivered is about 12 g. A film is then sealed over the moulds by heating.

The moulds are then cut so as to have sheets of 4 to 10 blisters.

The product is then cooled in a cooling tunnel at 5°C, for about 10 minutes, so as to ensure rapid solidification of the envelope material.

The sheets of 4 to 10 blisters are then packaged in carton cases.
*Use*: The cooking aid thus obtained can serve for reconstituting a chicken stock. 200 g of boiling water are added to a cube thus obtained of the product according to the invention. The envelope melts rapidly and releases the fluid filling which becomes easily diluted in the hot water. A chicken stock is thus easily and rapidly obtained which has the flavour characteristics of a freshly prepared stock.

## Claims

1. Cooking aid composed of an envelope based on fat which is solid at room temperature and a fluid flavouring filling, wherein the filling comprises salt in a proportion of 10 to 40% of the weight of the filling.

2. Cooking aid according to claim 1, **characterised in that** the envelope has a fat content of between 40 and 100%, preferably 60 and 80%, and comprises up to 60% of polysaccharides and/or of proteins and/or of fibres and/or of salt.

3. Cooking aid according to either of claims 1 and 2, **characterised in that** the envelope fat has a melting range of between 30 and 60°C.

4. Cooking aid according to either of claims 1 and 2, **characterised in that** the filling/envelope proportion relative to the final product is in a range from 70/30 to 10/90.

5. Cooking aid according to either of claims 1 and 2, **characterised in that** the filling is a filling with an aqueous and/or fatty base.

6. Cooking aid according to either of claims 1 and 2, **characterised in that** the filling contains food particles and/or thickening agents.

7. Cooking aid according to either of claims 1 and 2, **characterised in that** food particles are included in and/or cover the envelope.

8. Cooking aid according to either of claims 1 and 2, **characterised in that** the water activity of the filling is between 0.2 and 0.8.

9. Method for rapid distribution of flavour within a food product selected from cooked pasta, rice, vegetables, meat, fish, prepared meals, sauce dishes, by adding a cooking aid composed of an envelope based on fat which is solid at room temperature and a fluid flavouring filling into hot foods or a hot frying pan, whereby the envelope melts rapidly and releases the filling, wherein the filling comprises salt in a proportion of 10 to 40% of the weight of the filling.

## Patentansprüche

1. Kochhilfsmittel, das aus einer Umhüllung, die auf einem Fett basiert, das bei Raumtemperatur fest ist, und einer fließfähigen Aromatisierungsfüllung zusammengesetzt ist, wobei die Füllung Salz in einem Anteil von 10 bis 40% des Gewichts der Füllung enthält.

2. Kochhilfsmittel nach Anspruch 1, **dadurch gekennzeichnet, dass** die Umhüllung einen Fettgehalt zwischen 40 und 100%, vorzugsweise zwischen 60 und 80%, aufweist und bis zu 60% Polysaccharide und/oder Proteine und/oder Fasern und/oder Salz aufweist.

3. Kochhilfsmittel nach irgendeinem der Ansprüche 1 und 2, **dadurch gekennzeichnet, dass** das Fett der Umhüllung einen Schmelzbereich zwischen 30 und 60°C aufweist.

4. Kochhilfsmittel nach irgendeinem der Ansprüche 1 und 2, **dadurch gekennzeichnet, dass** der proportionale Füllungs/Umhüllungsanteil, bezogen auf das Endprodukt, in einem Bereich von 70/30 bis 10/90 liegt.

5. Kochhilfsmittel nach irgendeinem der Ansprüche 1 und 2, **dadurch gekennzeichnet, dass** die Füllung eine Füllung mit einer wässrigen und/oder fetthaltigen Basis ist.

6. Kochhilfsmittel nach irgendeinem der Ansprüche 1 und 2, **dadurch gekennzeichnet, dass** die Füllung Nahrungsmittelteilchen und/oder Verdickungsmittel enthält.

7. Kochhilfsmittel nach irgendeinem der Ansprüche 1 und 2, **dadurch gekennzeichnet, dass** die Nahrungsmittelteilchen in der Umhüllung enthalten sind und/oder diese bedecken.

8. Kochhilfsmittel nach irgendeinem der Ansprüche 1 und 2, **dadurch gekennzeichnet, dass** die Wasseraktivität der Füllung zwischen 0,2 und 0,8 liegt.

9. Verfahren zur raschen Verteilung von Aroma in einem Nahrungsmittelprodukt, das ausgewählt ist aus gekochten Teigwaren, Reis, Gemüse, Fleisch, Fisch, Fertiggerichten, Soßengerichten, durch Zugabe eines Kochhilfsmittels, das aus einer Umhüllung, die auf einem Fett basiert, das bei Raumtemperatur fest ist, und einer fließfähigen Aromatisierungsfiillung zusammengesetzt ist, zu heißen Nahrungsmitteln oder in eine heiße Bratpfanne, wobei die Umhüllung schnell schmilzt und die Füllung freigibt, wobei die Füllung Salz in einem Anteil von 10 bis 40% des Gewichts der Füllung enthält.

## Revendications

1. Aide culinaire composé d'une enveloppe à base de matière grasse qui est solide à température ambiante et d'une garniture aromatique fluide, dans lequel la garniture comprend du sel dans une proportion de 10 à 40 % du poids de la garniture.

2. Aide culinaire selon la revendication 1, **caractérisé en ce que** l'enveloppe présente une teneur en matière grasse comprise entre 40 et 100 %, de préférence entre 60 et 80 %, et comprend jusqu'à 60 % de polysaccharides et/ou de protéines et/ou de fibres et/ou de sel.

3. Aide culinaire selon l'une des revendications 1 et 2, **caractérisé en ce que** la matière grasse de l'enveloppe présente une plage de fusion comprise entre 30 et 60 °C.

4. Aide culinaire selon l'une des revendications 1 et 2, **caractérisé en ce que** la proportion garniture/enveloppe par rapport au produit final est comprise dans une gamme de 70/30 à 10/90.

5. Aide culinaire selon l'une des revendications 1 et 2, **caractérisé en ce que** la garniture est une garniture à base aqueuse et/ou grasse.

6. Aide culinaire selon l'une des revendications 1 et 2, **caractérisé en ce que** la garniture contient des particules alimentaires et/ou des agents épaississants.

7. Aide culinaire selon l'une des revendications 1 et 2, **caractérisé en ce que** des particules alimentaires sont incluses dans et/ou recouvrent l'enveloppe.

8. Aide culinaire selon l'une des revendications 1 et 2, **caractérisé en ce que** l'activité de l'eau de la garniture est comprise entre 0,2 et 0,8.

9. Procédé pour la distribution rapide d'un arôme dans un produit alimentaire sélectionné parmi des pâtes cuites, du riz, des légumes, de la viande, du poisson, des plats cuisinés, des plats en sauce, en ajoutant un aide culinaire, lequel est composé d'une enveloppe à base de matière grasse qui est solide à température ambiante et d'une garniture aromatique fluide, à des aliments chauds ou dans une poêle à frire chaude, dans lequel l'enveloppe fond rapidement et libère la garniture, dans lequel la garniture comprend du sel dans une proportion de 10 à 40 % du poids de la garniture.
